Europäisches Patentamt

**European Patent Office**

Office européen des brevets

(11) Veröffentlichungsnummer: **0 057 934**
A1

(12) **EUROPÄISCHE PATENTANMELDUNG**

(21) Anmeldenummer: 82100926.3

(22) Anmeldetag: 09.02.82

(51) Int. Cl.³: **B 22 C 1/00**
B 22 C 1/22, C 07 C 31/26
C 07 H 3/02

(30) Priorität: 11.02.81 DE 3104763

(43) Veröffentlichungstag der Anmeldung:
18.08.82 Patentblatt 82/33

(84) Benannte Vertragsstaaten:
AT BE CH FR GB IT LI LU NL SE

(71) Anmelder: Maizena Gesellschaft mbH
Postfach 10 43 20 Spaldingstrasse 218
D-2000 Hamburg 1(DE)

(72) Erfinder: Gebhard, Jürgen
Hirschweg 5
D-4190 Kleve-Matterborn(DE)

(72) Erfinder: Krause, Frank, Dr.
Arnoldstrasse 17
D-4190 Kleve-Matterborn(DE)

(74) Vertreter: Fischer, Walter
Maizena Gesellschaft mbH Postfach 10 43 20
D-2000 Hamburg 1(DE)

(54) Furanharzbindemittel für Giessereiform- und Kernsand.

(57) In Furanharzbindemitteln für Gießereiform- und -kernsand wird zur Kostensenkung nach dem Stand der Technik ein Teil des Furfurylalkohols durch preiswerteren Äthylen- oder Propylenglykol ersetzt, wodurch sich jedoch erfahrungsgemäß die Aushärteigenschaften verschlechtern.

Erfindungsgemäß wird der Furfurylalkohol sowie gegebenenfalls auch ein Teil der Harnstoff/Formaldehyd-Komponente solcher Bindemittel statt dessen teilweise durch wohlfeilen Sorbit, der gegebenenfalls oligomere, von Hexit(en) abgeleitete Zuckeralkohole enthalten kann, ersetzt, ohne daß dadurch eine wesentliche Verschlechterung der Aushärteigenschaften in Kauf genommen zu werden braucht.

EP 0 057 934 A1

COMPLETE DOCUMENT

Die Erfindung betrifft ein Furanharzbindemittel für Gießereiform- und -kernsand, enthaltend Furfurylalkohol, Harnstoff und Formaldehyd, gegebenenfalls in vorkondensierter Form, sowie mindestens einen alyphatischen Polyol als Streckmittel bzw. teilweisen Ersatz für Furfurylalkohol und/oder Harnstoff/ Formaldehyd als notwendige Komponenten und gegebenenfalls einen oder mehrere übliche Zusätze.

Zur Herstellung von Gießereiformen und -kernen werden bekanntlich seit geraumer Zeit neben anderen anorganischen und insbesondere organischen Bindemitteln, wie Phenolharzen, Novolaken und Isocyanaten, auch kalthärtende Furanharzbindemittel verwendet, die sich gegenüber anderen Bindemitteln zwar in der Regel durch eine Reihe von Vorteilen, insbesondere schnelle Aushärtung
hohe Bindekraft (Festigkeitseigenschaften)
weitgehende Umweltfreundlichkeit und gute Rückgewinnbarkeit des gebrauchten Sandes auszeichnen, in verschiedener Hinsicht, insbesondere bezüglich der Wirtschaftlichkeit aber dennoch nicht voll befriedigen können.

Die Zusatzmenge an Furanharzbindemitteln bei der Herstellung von Gießereiformen und -kernen liegt im allgemeinen zwischen 0,6 und 2,5 Gew.-% und üblicherweise meist bei etwa 1 Gew.-%.

Die für diesen Zweck eingesetzten Furanharze sind Vorkondensate und/oder Mischungen von - relativ teurem - Furfurylalkohol mit Harnstoff und Formaldehyd bzw. Harnstoff/Formaldehyd-Vorkondensaten, denen im allgemeinen Silane als Haftvermittler zur Verbesserung der Festigkeitseigenschaften zugesetzt werden.

Furanharze werden mit starken Säuren ausgehärtet, d.h., daß ihre Vernetzung im stark sauren Bereich abläuft. Die Aushärtzeit hängt dabei in erster Linie von dem jeweiligen Furanharztyp, von den klimatischen Bedingungen (Temperatur und Luftfeuchtigkeit) und der Stärke der verwendeten Säure ab. Als Härter werden in der Praxis heute üblicherweise technische Toluolsulfonsäure bzw. ein Isomerengemisch aus ortho- und para-Toluolsulfonsäure, meist in Form einer etwa 60 bis 67 %-igen wäßrigen Lösung eingesetzt. Auch die Verwendung von ortho-Phosphorsäure unterschiedlichster Konzentration und Reinheit ist für diesen Zweck gebräuchlich.

Fallweise werden den Furanharzen weitere Zusätze, insbesondere Streckmittel, wie Äthylenglykol oder ähnliche aliphatische Polyole zugesetzt, die dazu dienen sollen, den Anteil an relativ teurem Furfurylalkohol zu reduzieren. Diese Streckmittel sollen ferner dazu beitragen, den Anteil an Harnstoff/Formaldehyd-Vorkondensat und damit den Stickstoffgehalt im Furanharzbindemittel so gering wie möglich zu halten und den Gehalt des Furanharzes an freiem Formaldehyd zu vermindern. Beides ist aus Gesundheitsgründen erwünscht und fallweise sogar dringend erforderlich.

Die bekannten Streckmittel erfüllen zwar grundsätzlich die vorstehenden Zwecke, sind aber aus einer Reihe von Gründen doch nicht voll befriedigend. So sind die bislang für diesen Zweck verwendeten aliphatischen Polyole zwar billiger als Furfurylalkohol, aber immer noch nicht so preiswert wie gewünscht. Vor allem aber muß ihr Einsatz mit dem Nachteil erkauft werden, daß sich dadurch die Aushärteigenschaften der Furanharzbindemittel erheblich und fallweise sogar die erzielbaren Endfestigkeiten fühlbar verschlechtern.

Der Erfindung lag daher die Aufgabe zugrunde, die Nachteile des Standes der Technik zu überwinden und verbesserte Furanharzbindemittel der eingangs bezeichneten Art zur Verfügung zu stellen, die noch preiswertere Streckmittel enthalten und dennoch befriedigende Aushärteigenschaften besitzen.

Diese Aufgabe wird erfindungsgemäß in der im Hauptanspruch

- 4 -                                    0057934

gekennzeichneten Weise ausgehend von der Erkenntnis gelöst, daß Sorbit bzw. überwiegend aus gegebenenfalls substituiertem Sorbit bestehende Zuckeralkoholgemische nicht nur preiswerter als die bislang als Streckmittel verwendeten aliphatischen Polyole, insbesondere Äthylenglykol ist (sind), sondern im Gegensatz zu den nach dem Stand der Technik als Streckmittel verwendeten Polyolen überraschenderweise auch keine signifikante Verschlechterung der Aushärt- und/oder Festigkeitseigenschaften gegenüber entsprechenden Furanharzbindemitteln ohne Streckmittelzusatz bewirkt. Diese Feststellung ist um so überraschender, als nach dem Stand der Technik an chemisch verwandten Streckmitteln reduzierende Zucker empfohlen, die entsprechenden Zuckeralkohole jedoch für diesen Zweck ausdrücklich als ungeeignet bezeichnet werden (DE-OS 14 33 942).

Aus Kostengründen werden erfindungsgemäß als Zuckeralkoholkomponente Produkte bevorzugt, die hauptsächlich aus hydrierter Dextrose bestehen und als Rest im wesentlichen untergeordnete Mengen hydrierter Maltosaccharide enthalten, wobei Hydrierungsprodukte von - gegebenenfalls partiell substituierten - Stärke- und/oder Cellulosehydrolysaten, besonders preiswert und daher bevorzugt sind.

Die Maltooligoite, die in der Zuckeralkoholkomponente erfindungsgemäßer Furanharzbindemittel enthalten sein können, verschlechtern zwar die Aushärteeigenschaften nicht nennenswert, beeinträchtigen aber einerseits - in größeren Mengen - die Entmischungsstabilität fühlbar und ergeben andererseits eine beachtliche weitere Kostensenkung. Der Anteil dieser höheren Zuckeralkohole sollte daher aus Kostengründen möglichst hoch, mit Rücksicht auf die Entmischungs- bzw. Lagerungsstabilität dagegen möglichst gering gewählt werden. Wo das Optimum liegt, hängt von den Umständen des Einzelfalles ab, so daß sich hierfür keine starre Auswahlregel geben läßt, jedoch kann als Anhaltspunkt gesagt werden, daß Furanharzbindemittel mit Zuckeralkoholkomponenten, deren Sorbitgehalt mindestens

70 Gew.-% beträgt, erfahrungsgemäß eine meist noch durchaus ausreichende und bei Sorbitgehalten von mindestens 85 Gew.-% in aller Regel eine voll befriedigende Entmischungsstabilität aufweisen. Praktisch völlig problemlos ist diesbezüglich nach den bisher vorliegenden Erfahrungen, die Verwendung von Zuckeralkoholkomponenten mit Sorbitgehalten von etwa 93 Gew.-% und darüber.

Der Anteil an Streckmittel in den erfindungsgemäßen Furanharzbindemitteln ist technisch nach unten praktisch unbegrenzt und auch nach oben naturgemäß nicht scharf zu begrenzen, jedoch empfiehlt es sich erfahrungsgemäß meist nicht, Streckmittelzusätze von wesentlich mehr als 22 Gew.-% zu verwenden. Vorzugsweise werden sogar höchstens 15 und insbesondere nicht mehr als etwa 10 Gew.-% Streckmittel verwendet, wobei der Rest hauptsächlich aus Furfurylalkohol, der zweckmäßigerweise in Mengen von etwa 30 bis 95, vorzugsweise 50 bis 90 und insbesondere etwa 60 bis 75 Gew.-% eingesetzt wird, und Harnstoff/Formaldehyd in Mengen von zweckmäßig 2 bis 67, vorzugsweise 5 bis 45 und insbesondere 15 bis 30 Gew.-% besteht.

Wie bereits erwähnt, braucht bei den Furanharzbindemitteln der Erfindung das Streckmittel keineswegs vollständig aus der diese kennzeichnenden Zuckeralkoholkomponente zu bestehen, deren Anteil zweckmäßig in einem Bereich von 0,2 bis 20, vorzugsweise 1 bis 15 und insbesondere 3 bis 8 Gew.-% gewählt wird.

Weiterhin sei darauf hingewiesen, daß es sich fallweise empfiehlt, die Lagerungsbeständigkeit der Furanharzbindemittel durch Zusatz eines Lösungsvermittlers bzw. Entmischungsstabilisators zu verbessern, wozu sich beispielsweise Äthylenglykol hervorragend eignet. Daneben können die Furanharzbindemittel gewünschtenfalls weitere an sich in derartigen Produkten übliche Zusätze, z.B. Haftvermittler, insbesondere Silane, enthalten.

Schließlich sei noch erwähnt, daß die erfindungsgemäßen Furanharzbindemittel beträchtliche Mengen Wasser enthalten können, so daß man die Zuckeralkoholkomponente, die üblicherweise als Sirup mit einem Trockensubstanzgehalt von etwa 70 % im Handel erhältlich ist, nicht vorzutrocknen braucht.

Die Beispiele und Vergleichsversuche erläutern die Erfindung und deren wesentliche Vorteile gegenüber dem Stand der Tech-nik.

Beispiele 1 bis 6 und Vergleichsversuche

Als Bezugsprodukt wird ein bekanntes Furanharzbindemittel ohne Streckmittelzusatz mit folgender Zusammensetzung verwen-det (Harz "A"):

| | |
|---|---|
| Harnstoff/Formaldehyd-Vorkondensat (70 %-ige wässr. Lösung) | 29,88 Gew.-% |
| Silan | 0,12 " |
| Furfurylalkohol | 70,00 " |

Dieses Bezugsprodukt wird mit jeweils sechs erfindungsgemäßen und bekannten streckmittelhaltigen Furanharzbindemitteln (Beispiele 1 bis 6 bzw. Vergleichsharze 1 bis 6) verglichen, die bei jeweils mit Harz "A" hinsichtlich des Silangehalts identischer Zusammensetzung folgende Rezepturen aufweisen:

Tabelle I .

| Komponente (Art) | Anteil in Gew.-% | | | | | | | | | | | |
|---|---|---|---|---|---|---|---|---|---|---|---|---|
| | Beispiel Nr. | | | | | | Vergleichsharz | | | | | |
| | 1 | 2 | 3 | 4 | 5 | 6 | 1 | 2 | 3 | 4 | 5 | 6 |
| Harnstoff/Formalde-hyd-Vorkondensat (70%-ige wässr. Lösung) | 29,88 | 29,8 | 29,88 | 28,8 | 27,74 | 26,67 | 29,88 | 29,88 | 29,88 | 28,8 | 27,74 | 26,67 |
| Furfurylalkohol | 67,5 | 65,0 | 62,5 | 67,5 | 65,o | 62,5 | 67,5 | 65,0 | 62,5 | 67,5 | 65,0 | 62,5 |
| Sorbitsirup (70%-ige wässr. Lösung) | 2,5 | 5,0 | 7,5 | 3,58 | 7,14 | 10,71 | - | - | - | - | - | - |
| entsprechend Sorbit-TS | 1,75 | 3,5 | 5,25 | 2,5 | 5,0 | 7,5 | - | - | - | - | - | - |
| Äthylenglykol (70%-ige wässr. Lösung) | - | - | - | - | - | - | 2,5 | 5,0 | 7,5 | 3,58 | 7,14 | 10,71 |
| entsprechend Äthylenglykol-TS | - | - | - | - | - | - | 1,75 | 3,5 | 5,25 | 2,5 | 5,0 | 7,5 |

Zur Bestimmung der Aushärt- und Festigkeitseigenschaften werden mit allen diesen Furanharzbindemitteln in einer Menge von jeweils 1 Gew.-%, bezogen auf das Gesamtgewicht der Formmasse, unter Verwendung von Quarzsand (H 32) und p-Toluolsulfonsäure als Härter in einer Menge von 33 Gew.-%, bezogen auf Furanharzbindemittel, Testformlinge hergestellt, an denen die Entwicklung der Biegefestigkeit (in N/cm²) im zeitlichen Verlauf gemessen wird, wobei folgende Ergebnisse erzielt werden:

### Tabelle II

(Aushärtung im Labor bis 22°C und ca. 40 % rel. Luftfeuchtigkeit)

| Furanharzbindemittel | Biegefestigkeit (N/cm²) nach Aushärtzeiten | | | |
|---|---|---|---|---|
| | von 1 h | 2 h | 4 h | 24 h |
| A (Bezugsprodukt) | 115 | 170 | 210 | 280 |
| Beispiel 1 | 130 | 170 | 205 | 280 |
| Vergleichsversuch 1 | 85 | 150 | 190 | 265 |
| Beispiel 2 | 120 | 165 | 200 | 275 |
| Vergleichsversuch 2 | 55 | 130 | 175 | 240 |
| Beispiel 3 | 100 | 170 | 200 | 270 |
| Vergleichsversuch 3 | 40 | 115 | 160 | 215 |
| Beispiel 4 | 140 | 190 | 240 | 280 |
| Vergleichsversuch 4 | 100 | 150 | 195 | 260 |
| Beispiel 5 | 135 | 180 | 225 | 280 |
| Vergleichsversuch 5 | 65 | 130 | 180 | 230 |
| Beispiel 6 | 120 | 175 | 220 | 265 |
| Vergleichsversuch 6 | 40 | 120 | 165 | 210 |

0057934

## Tabelle III

(Aushärtung im Klimaraum bei 20°C und ca. 65 % rel. Luftfeuchtigkeit)

| Furanharzbindemittel | Biegefestigkeit (N/cm²) nach Aushärtzeit | | | |
|---|---|---|---|---|
| | von 1 h | 2 h | 4 h | 24 h |
| A (Bezugsprodukt) | 10 | 150 | 330 | 350 |
| Beispiel 1 | 15 | 165 | 350 | 360 |
| Vergleichsversuch 1 | 5 | 120 | 320 | 325 |
| Beispiel 2 | 20 | 150 | 330 | 335 |
| Vergleichsversuch 2 | - | 75 | 250 | 290 |
| Beispiel 3 | 15 | 130 | 300 | 330 |
| Vergleichsversuch 3 | - | 45 | 200 | 275 |
| Beispiel 4 | 20 | 160 | 360 | 370 |
| Vergleichsversuch 4 | 5 | 95 | 290 | 315 |
| Beispiel 5 | 15 | 140 | 340 | 355 |
| Vergleichsversuch 5 | - | 45 | 190 | 280 |
| Beispiel 6 | 10 | 120 | 290 | 320 |
| Vergleichsversuch 6 | - | 25 | 100 | 235 |

Aus diesen Versuchsergebnissen ist zu ersehen, daß sämtliche
erfindungsgemäßen, mit 70 %-iger wäßriger Sorbitlösung gestreckten Furanharzbindemittel praktisch gleich gute Aushä rt-
und (End-)Festigkeitseigenschaften wie das streckmittelfreie
Bezugsprodukt aufweisen, während die Äthylenglykol in entsprechenden Mengen als Streckmittel enthaltenden

Vergleichsbindemittel durchweg deutlich schlechtere (End-)
Festigkeits- und insbesondere Aushärteigenschaften aufweisen.

"Furanharzbindemittel für Gießereiform- und -kernsand"

Patentansprüche:

1. Furanharzbindemittel für Gießereiform- und -kernsand, enthaltend Furfurylalkohol, Harnstoff und Formaldehyd, gegebenenfalls in vorkondensierter Form, sowie mindestens einen aliphatischen Polyol als Streckmittel bzw. teilweisen Ersatz für Furfurylalkohol und/oder Harnstoff/Formaldehyd als notwendige Komponenten und gegebenenfalls einen oder mehrere übliche Zusätze, dadurch g e k e n n z e i c h - n e t, daß das Streckmittel zumindest teilweise aus gegebenenfalls partiell substituiertem und/oder eine untergeordnete Menge di- und/oder oligomere(n), von Hexit(en) abgeleitete(n) Zuckeralkohol(e) enthaltendem Sorbit (Zuckeralkoholkomponente) besteht.

2. Furanharzbindemittel nach Anspruch 1, dadurch g e k e n n - z e i c h n e t, daß die Zuckeralkoholkomponente im wesentlichen aus einem hydrierten und gegebenenfalls partiell substituierten Stärke- und/oder Cellulosehydrolysat besteht.

3. Furanharzbindemittel nach Anspruch 1 oder 2, dadurch g e - k e n n z e i c h n e t, daß die Zuckeralkoholkomponente zu mindestens 70, vorzugsweise über 85 und insbesondere mindestens 93 Gew.-% aus Sorbit besteht.

4. Furanharzbindemittel nach einem der Ansprüche 1 bis 3, dadurch g e k e n n z e i c h n e t, daß es, bezogen auf Gesamt-TS, etwa 0,2 bis 20, vorzugsweise 1 bis 15 und insbesondere 3 bis 8 Gew.-% Zuckeralkoholkomponente enthält, mit der Maßgabe, daß sein Gesamtgehalt an Streckmittel höchstens 22, vorzugsweise höchstens 15 und insbesondere nicht mehr als 10 Gew.-%, der Gehalt an Furfurylalkohol von 30 bis 95, vorzugsweise 50 bis 90 und insbesondere

0057934

60 bis 75 Gew.-% und der an Harnstoff/Formaldehyd 2 bis 67, vorzugsweise 5 bis 45 und insbesondere 20 bis 30 Gew.-% beträgt, sowie daß der Gehalt an Furfurylalkohol und Harnstoff/Formaldehyd in einem Bereich von 80 bis 99,8, vorzugsweise 85 bis 99 und insbesondere von 92 bis 97 Gew.-% liegt.

5. Furanharzbindemittel nach einem der Ansprüche 1 bis 4, dadurch g e k e n n z e i c h n e t, daß es zusätzlich einen Entmischungsstabilisator für die Zuckeralkoholkomponente, insbesondere Äthylenglykol enthält.

0057934

Europäisches
Patentamt

EUROPÄISCHER RECHERCHENBERICHT

Nummer der Anmeldung

EP 82 10 0926.3

## EINSCHLÄGIGE DOKUMENTE

| Kategorie | Kennzeichnung des Dokuments mit Angabe, soweit erforderlich, der maßgeblichen Teile | betrifft Anspruch | KLASSIFIKATION DER ANMELDUNG (Int Cl.³) |
|---|---|---|---|
| X | EP - A1 - 0 012 276 (GREMOLITH AG) <br> * Anspruch 9 * <br> -- | 1 | B 22 C 1/00 <br> B 22 C 1/22 <br> C 07 C 31/26 <br> C 07 H 3/02 |
| Y | DE - B - 1 508 629 (CORN PRODUCTS CO.) <br> * Anspruch 1 * <br> -- | 1 | |
| Y | DE - A - 1 433 931 (ALBERTUSWERKE GMBH) <br> * Anspruch 2 * <br> -- | 1 | |
| A | EP - A1 - 0 007 686 (TALRES DEVELOPEMENT et al.) <br> * Ansprüche 1 bis 4 * <br> -- | 1 | RECHERCHIERTE SACHGEBIETE (Int. Cl.³) <br><br> B 22 C 1/00 <br> C 07 C 31/00 <br> C 07 H 3/00 |
| D,A | DE - A - 1 433 942 (CORN PRODUCTS CO.) <br> * Ansprüche 1, 2 * <br> ---- | 1 | |

Der vorliegende Recherchenbericht wurde für alle Patentansprüche erstellt.

| Recherchenort | Abschlußdatum der Recherche | Prüfer |
|---|---|---|
| Berlin | 20-04-1982 | GOLDSCHMIDT |

EPA form 1503.1  06.78